# EUROPÄISCHE PATENTSCHRIFT

(11) **EP 4 289 034 B1**
(45) Veröffentlichungstag und Bekanntmachung des Hinweises auf die Patenterteilung: **22.01.2025**
(21) Anmeldenummer: 22706535.6
(22) Anmeldetag: 02.02.2022
(51) Int. Cl.: H02H 1/00, H02H 3/16, H02J 1/06

(54) **LEITUNGSANORDNUNG FÜR EIN GLEICHSPANNUNGS-BORDNETZ EINES KRAFTFAHRZEUGES**
LEAD ASSEMBLY FOR A DC ELECTRICAL NETWORK OF A MOTOR VEHICLE
AGENCEMENT DE CÂBLES POUR UN RÉSEAU EMBARQUÉ À TENSION CONTINUE D'UN VÉHICULE AUTOMOBILE

(30) Priorität: 02.02.2021 EP 21154846
(43) Veröffentlichungstag der Anmeldung: 13.12.2023
(73) Patentinhaber: Gebauer & Griller Kabelwerke Gesellschaft m.b.H., 1190 Wien (AT)
(72) Erfinder: ZACH, Gerald, 2120 Obersdorf (AT)
(74) Vertreter: KLIMENT & HENHAPEL
(86) Internationale Anmeldenummer: PCT/EP2022/052500
(87) Internationale Veröffentlichungsnummer: WO 2022/167493

(56) Entgegenhaltungen:
- EP-A1- 1 605 569
- EP-A2- 1 114 752
- WO-A1-2014/057017
- DE-A1- 102018 206 648

## Beschreibung

### GEBIET DER ERFINDUNG

Die Erfindung betrifft eine Leitungsanordnung für ein Gleichspannungs-Bordnetz eines Kraftfahrzeuges, umfassend
- eine Stromquelle,
- zumindest einen an einem Grundpotential anschließbaren, vorzugsweise angeschlossenen, Verbraucher,
- eine eine Abschirmung und einen Innenleiter aufweisende Versorgungsleitung, welche Versorgungsleitung quellenseitig an die Stromquelle und lastseitig an den zumindest einen Verbraucher angeschlossen ist;
- eine zwischen Stromquelle und Versorgungsleitung geschaltete Sicherheitselektronik mit einem ansteuerbaren Trennelement.

Üblicherweise ist der Verbraucher einerseits über die Versorgungsleitung (Plusleitung) an der Stromquelle bzw. Spannungsquelle (bspw. Pluspol einer Batterie) angeschlossen und andererseits am Grundpotential (bspw. Minuspol einer Batterie bzw. Karosseriemasse) angeschlossen. In der Folge wird unter dem Begriff "quellenseitig" im Nahbereich der Stromquelle angeordnet und unter dem Begriff "lastseitig" im Nahbereich des Verbrauchers angeordnet verstanden. Bei einem Verbraucher handelt es sich in der Regel selbst um ein komplexes Bauteil, insbesondere um eine Komponente des Fahrzeugs, wie ein Klimagerät, ein Heizelement, eine motorisierte Verstelleinrichtung oder eine Beleuchtungseinheit. Beispielsweise können auch elektrische Antriebsmotoren oder elektrische Lenkeinrichtungen gegebenenfalls der Gruppe der Verbraucher zugeordnet werden.

Versorgungsleitungen umfassend einen Innenleiter und eine Abschirmung werden oftmals als geschirmte Leitung bezeichnet, wobei Abschirmung und Innenleiter durch eine innere Isolationsschicht voneinander getrennt sind. Die Abschirmung wird in der Regel nach außen hin von einem isolierenden Kabelmantel, vorzugsweise aus einem Kunststoff, umgeben.

Die Sicherheitselektronik ist im Regelfall ausgelegt, um bei einem Fehlerzustand, beispielsweise bei einem Kurzschluss in der Leitungsanordnung, den Stromkreis zu unterbrechen und Folgeschäden zu vermeiden. Zu diesem Zweck umfasst die Sicherheitselektronik ein ansteuerbares Trennelement, wobei es sich beispielsweise um einen ansteuerbaren elektrischen oder elektro-mechanischen Trennschalter oder um ein ansteuerbares Absprengelement, auch bekannt als Pyrofuse, handeln kann.

### STAND DER TECHNIK

Aufgrund der oft gewünschten Anhebung der Bordnetzspannung von Gleichspannungs-Bordnetzen für Kraftfahrzeuge, welche herkömmlicher Weise als 12V Netze ausgebildet sind, entstehen neue potentielle Gefahrenquellen in der Leitungsanordnung. So besteht insbesondere für geschirmte Versorgungsleitungen neben einem Kurzschluss zwischen Abschirmung und Innenleiter bzw. zwischen Innenleiter und Grundpotential auch die Gefahr des Auftretens eines Lichtbogens, zumeist zwischen Innenleiter und einem anderen Teil des Fahrzeugs, insbesondere einem auf Masse liegenden Teil. Da eine Schmelzsicherung oder eine andere Form einer einfachen elektronischen Überstromabsicherung im Falle eines Lichtbogens aufgrund der geringeren Höhe der Lichtbogenströme die Stromverbindung nicht zuverlässig unterbrechen kann, werden im Stand der Technik verschiedene komplexe Vorrichtungen und Verfahren vorgeschlagen, mittels welchen eine Lichtbogenausbildung feststellbar ist. Die mangelnde Zuverlässigkeit der Schmelzsicherung kann darauf zurückgeführt werden, dass die im Kurzschlussfall fließenden Ströme im Bereich der Betriebsströme oder sogar unterhalb dieser liegen, sodass die Schmelzsicherung im ungünstigsten Fall gar nicht auslöst oder erst mit erheblicher Verzögerung.

Beispielsweise kann vorgesehen sein, dass die Ausbildung eines Lichtbogens über eine Detektionselektronik überwacht wird, mittels welcher charakteristische Frequenzen im Stromverlauf detektiert werden, die durch den Lichtbogen verursacht werden. Die DE 101 32 752 B4 schlägt beispielsweise eine zumindest abschnittsweise entlang der Versorgungsleitung verlaufende Detektionsleitung vor, wobei das die Detektionsleitung umgebende Isolationsmaterial derart ausgebildet ist, dass dieses an der Stelle an der ein Lichtbogen auftritt schmilzt und es zu einer Kontaktierung von Versorgungsleitung und Detektionsleitung kommt.

Die DE 10 2012 019 996 A1 schlägt hingegen eine Sicherheitselektronik mit einem ansteuerbaren Trennelement vor, wobei die Sicherheitselektronik eine Auswerteeinrichtung und eine mit der Auswerteeinrichtung verbundene Sensorleitung umfasst, wobei ein erster Widerstand zwischen Sensorleitung und einer Masseleitung eine Verbrauchers angeordnet ist. Alternativ wird ein Widerstandssystem nach Art einer Wheatstoneschen Messbrücke vorgeschlagen.

Die EP 1 114 752 A2 schlägt eine Batterieleitung mit einem Innenleiter und einem Schirm vor, wobei der Schirm auf ein definiertes Potential gelegt ist und wobei die Batterieleitung eine Fahrzeugbatterie mit einem Generator verbindet. Der Schirm wird an beiden Enden an eine Auswerteeinrichtung angeschlossen, wobei die Auswerteinrichtungen jeweils einen Spannungsteiler umfassen. Die Spannungsteiler sind einerseits an die Betriebsspannung angeschlossen und andererseits gegen Masse geführt.

Die EP 1 605 569 A1 betrifft eine redundante Spannungsversorgung mit einem Koaxialkabel, wobei eine Last wahlweise über einen Innenleiter und/oder einen Außenleiter des Koaxialkabels mit einer Spannungsquelle verbindbar ist. Um Fehlerzustände zu ermitteln, ist ein Schaltkreis mit mehreren Widerständen vorgesehen, wobei die Widerstände vorteilhafterweise gleich groß sind und zweckmäßigerweise alle einen Wert von 1 kOhm haben.

### AUFGABE DER ERFINDUNG

Es ist nun eine Aufgabe der Erfindung eine Leitungsanordnung vorzuschlagen, welche einerseits eine effektivere Erkennung und sichere Behebung sicherheitskritischer Fehlerzustände, insbesondere paralleler Lichtbögen, erlaubt sowie andererseits möglichst kostengünstig herstellbar und robust im Aufbau ist. Eine weitere Aufgabe der Erfindung kann darin gesehen werden, eine Sicherheitselektronik vorzuschlagen, welche in der Lage ist, eine möglichst große Anzahl unterschiedlicher Fehlerzustände bzw. gegebenenfalls auch Betriebszustände zu erkennen. Gemäß einem weiteren Aspekt der Erfindung soll die Leitungsanordnung die einfache Anschließbarkeit und Überwachung mehrerer Verbraucher ermöglichen.

### DARSTELLUNG DER ERFINDUNG

Diese Aufgabe wird in einer erfindungsgemäßen Leitungsanordnung gemäß Anspruch 1 dadurch erreicht, dass die Abschirmung als Sensorleiter ausgebildet ist, indem die Abschirmung lastseitig über einen, im Verhältnis zu einem Lastwiderstand hochohmigen, Abschlusswiderstand an den Innenleiter angeschlossen ist und quellenseitig über einen, im Verhältnis zum Abschlusswiderstand niederohmigen, Detektionswiderstand am Grundpotential angeschlossen ist, wobei die Sicherheitselektronik eine Auswerteschaltung umfasst und die Auswerteschaltung am Detektionswiderstand eine Detektionsspannung abgreift, um basierend auf der gemessenen Detektionsspannung zumindest einen ersten Fehlerzustand, insbesondere einen parallelen Lichtbogen, zu erkennen und das Trennelement zu betätigen, wenn die Detektionsspannung oberhalb einer ersten, einen Regelbetriebs-Spannungsbereich nach oben begrenzenden, oberen Spannungsschwelle liegt.

Unter Lastwiderstand wird dabei im Lichte der gegenständlichen Erfindung sowohl der tatsächliche ohmsche Widerstand eines Verbrauchers verstanden als auch ein virtueller repräsentativer Widerstand, der zur Darstellung des, in der Regel komplexen, Verbrauchers herangezogen wird. Statt dem Begriff "Lastwiderstand" könnten somit analog auch die Begriffe "Lastwiderstand des Verbrauchers" oder "ein den Verbraucher repräsentierender Lastwiderstand" verwendet werden. Im Falle mehrerer Verbraucher hat in der Regel jeder Verbraucher einen entsprechenden Lastwiderstand.

Die Erfindung beruht im Wesentlichen auf zwei Aspekten: Gemäß dem ersten Aspekt wird die Abschirmung der Versorgungsleitung als mit der Sicherheitselektronik verbundener Sensorleiter genützt, wobei sowohl herkömmliche Abschirmungen als auch, vorzugsweise geringfügig, modifizierte Abschirmungen zum Einsatz kommen können, wie im Zusammenhang mit zwei spezifischen Ausführungsvarianten in der Folge im Detail beschrieben wird. Somit wird einerseits ein einfacher und kostengünstiger Aufbau der Leitungsanordnung mit geringem Platzbedarf erreicht, da keine zusätzlichen Sensorleiter verlegt werden müssen, sondern eine geschirmte Leitung als Versorgungsleitung benutzt werden kann. Andererseits wird die Eigenschaft der Abschirmung, nämlich dass die Abschirmung den Innenleiter umgibt, auch zur spezifischen Fehlerdetektion, insbesondere für die Detektion von sicherheitskritischen sogenannten parallelen Lichtbögen zwischen dem Innenleiter und dem Grundpotential, insbesondere der Karosseriemasse, genützt. Dies deshalb, da bei einem parallelen Lichtbogen ein, im Vergleich zum Abschlusswiderstand niederohmiger, Kurzschluss über das aufgrund des Lichtbogens entstandene Plasma zwischen der als Sensorleiter ausgebildeten Abschirmung und dem Innenleiter erfolgt, unabhängig davon, an welcher radialen Position des Leitungsquerschnitts bzw. welcher Längsposition der Versorgungsleitung der Lichtbogen auftritt. Dieser Kurzschluss kann gemäß dem nachfolgend beschriebenen zweiten Aspekt der Erfindung in der Auswerteschaltung eindeutig mit einer hohen Erkennungssicherheit erkannt werden, um innerhalb möglichst kurzer Zeit entsprechende Gegenmaßnahmen zu setzen.

Der guten Ordnung halber sei angemerkt, dass ein durch einen parallelen Lichtbogen verursachter Fehlerzustand sich deutlich von einem durch einen seriellen Lichtbogen verursachten Fehlerzustand unterscheidet. Insbesondere ist die Entstehung eines seriellen Lichtbogens in der Regel auf eine Unterbrechung des stromführenden Pfades zurückzuführen, im Besonderen des Innenleiters, beispielsweise im Falle eines Litzenbruchs oder beim Abschließen eines Verbrauchers.

Der zweite Aspekt der Erfindung betrifft die in die Sicherheitselektronik integrierte Auswerteschaltung sowie die in Serie geschalteten elektrischen Widerstände, sprich Abschlusswiderstand und Detektionswiderstand, die an die als Sensorleiter ausgebildete Abschirmung angeschlossen sind. Da der Abschlusswiderstand lastseitig an den Innenleiter angeschlossen ist, also im Nahbereich des Verbrauchers, jedoch dem Verbraucher vorgeschaltet und der Detektionswiderstand quellenseitig, sprich im Nahbereich der Stromquelle, angeordnet ist, deckt die als Sensorleiter ausgebildete Abschirmung einen möglichst großen Teil einer Längserstreckung der Versorgungsleitung ab. Mit anderen Worten sind Abschlusswiderstand und Detektionswiderstand derart in der Leitungsanordnung positioniert, dass die Überdeckung von Sensorleiter und Versorgungsleitung maximiert ist.

Da der Abschlusswiderstand im Vergleich zum Lastwiderstand hochohmig ausgebildet ist und der Detektionswiderstand im Vergleich zum Abschlusswiderstand niederohmig, fungiert die Schaltung der Widerstände als Spannungsteiler. Unter "hochohmig" ist dabei zu verstehen, dass der elektrische Widerstand zumindest eine Größenordnung, bevorzugt mehrere Größenordnungen, oberhalb einer definierten Bezugsgröße liegt, während unter "niederohmig" zu verstehen ist, dass der elektrische Widerstand zumindest eine Größenordnung unterhalb einer definierten Bezugsgröße liegt.

Besonders bevorzugt ist es, wenn der elektrische Widerstand des Detektionswiderstands etwa ein bis drei Größenordnungen größer ist als ein durch das Plasma eines Lichtbogens zwischen Abschirmung und Innenleiter erfolgender Kurzschluss bzw. wenn der elektrische Widerstand des Detektionswiderstands etwa ein bis drei Größenordnungen größer ist als der Lastwiderstand. Insbesondere wenn der elektrische Widerstand des Detektionswiderstands größer ist als der Lastwiderstand, kann der Stromfluss durch die als Sensorleiter ausgebildete Abschirmung gering gehalten werden.

Beispielsweise kann in einer erfindungsgemäßen Leitungsanordnung der elektrische Leitungswiderstand des Innenleiters in der Größenordnung von 1 mOhm, der elektrische Widerstand eines Kurzschlusses durch Plasma sowie der Lastwiderstand eines Verbrauchers in der Größenordnung von zwischen 1 und 10 Ohm, der elektrische Widerstand des Detektionswiderstand in der Größenordnung von zwischen 100 Ohm und 1.000 Ohm und der elektrische Widerstand des Abschlusswiderstands in der Größenordnung von 10.000 Ohm liegen.

Dadurch, dass die Auswerteschaltung die Detektionsspannung am Detektionswiderstand abgreift, können aufgrund von Unterschieden in der Auswerteschaltung Rückschlüsse auf etwaige Fehlerzustände getroffen werden oder umgekehrt bestätigt werden, dass die Leitungsanordnung wie gewünscht funktioniert. Um diese Unterscheidung durchführen zu können, wird ein Regelbetriebs-Spannungsbereich zumindest durch Festlegen einer ersten oberen Spannungsschwelle definiert bzw. die Auswerteschaltung, beispielsweise ein analoger Komperator, entsprechend ausgelegt, um ein Überschreiten der ersten oberen Spannungsschwelle detektieren zu können. Kommt es nun zu einem Kurzschluss zwischen Innenleiter und Grundpotential (Karosseriemasse) mit der Ausbildung eines parallelen Lichtbogens, erfolgt ein niederohmiger Kurzschluss über das Plasma des Lichtbogens zwischen Innenleiter und der als Sensorleiter ausgebildeten Abschirmung. Dieser Kurzschluss wirkt parallel zum lastseitigen Abschlusswiderstand, sodass sich das Spannungsteiler-Verhältnis ändert und der Lichtbogen als erster Fehlerzustand ("paralleler Lichtbogen") durch die höhere, die erste obere Spannungsschwelle überschreitende, Detektionsspannung erkannt werden kann. Mit anderen Worten überbrückt der niederohmige Kurzschluss über das Plasma den Abschlusswiderstand, sodass sich das Spannungsteiler-Verhältnis entsprechend ändert. Über die Auswerteschaltung kann als Resultat des erkannten ersten Fehlerzustands das Trennelement angesteuert werden, um den Stromkreis zu unterbrechen. Folglich kann zumindest ein spezifischer Fehlerzustand, vorzugsweise können mehrere spezifische Fehlerzustände, detektiert werden, ohne auf Informationsrückmeldungen aus Verbrauchern und/oder Aggregaten über die Fahrzeugelektronik, beispielsweise über Systembusse, angewiesen zu sein.

Während für eine spezifische Leitungsanordnung der Regelbetriebs-Spannungsbereich eng definiert werden kann, ist es für eine möglichst flexible Anwendung derselben Leitungsanordnung in verschiedenen Fahrzeugen bzw. Fahrzeugmodellen vorteilhaft, einen breiteren Regelbetriebs-Spannungsbereich festzulegen, insbesondere wenn - wie nachfolgend im Zusammenhang mit weiteren Ausführungsvarianten besprochen - mehrere Verbraucher parallel an der Versorgungsleitung angeschlossen sind.

Während die erste obere Grenze des Regelbetriebs-Spannungsbereichs durch das für die Erkennung erforderliche Spannungsteiler-Verhältnis im zuvor beschriebenen Kurzschlussfall über das Plasma des parallelen Lichtbogens vorgegeben ist, ist die untere Grenze vorzugsweise durch jene Spannung vorgegeben, die über einen an der als Sensorleiter ausgebildeten Abschirmung angeschlossenen Abschlusswiderstand am Detektionswiderstand anliegt - sprich für den Fall, dass genau ein Verbraucher angeschlossen ist.

Die Sicherheitselektronik kann beispielsweise in eine elektronische Sicherheitsplattform für Kraftfahrzeuge oder in eine sogenannte Power Control Unit [PCU] eines Kraftfahrzeugs integriert sein. Besonders bevorzugt ist auch die Auswerteschaltung vollständig in die Sicherheitselektronik integriert.

Eine Ausführungsvariante der Erfindung sieht vor, dass die Abschirmung als metallisches Schirmgeflecht ausgebildet ist. In dieser Ausführungsvariante kann eine herkömmliche geschirmte Leitung mit einem metallischen Schirmgeflecht als Außenleiter als Versorgungsleitung verwendet werden, was eine besonders kostengünstige Variante darstellt. Zum Zwecke der Kostenreduktion und/oder zur Verringerung des Gewichts der Versorgungsleitung ist das Schirmgeflecht bevorzugt dünnmaschig, sprich mit einer verhältnismäßig geringen Maschendichte, ausgebildet, da sich in der Praxis gezeigt hat, dass das Plasma des Lichtbogens je nach Stromstärke über mehrere Millimeter wirken kann und die maximal auftretenden Ströme auf der als Sensorleiter ausgebildeten Abschirmung jedenfalls durch den Detektionswiderstand begrenzt werden. Schirmgeflechte sind vorzugsweise aus Kupfer- oder Aluminiumdrähten gefertigt.

In einer weiteren Ausführungsvariante der Erfindung ist vorgesehen, dass die Abschirmung einen metallischen Folienschirm und zumindest einen den Folienschirm kontaktierenden, insbesondere einen am Folienschirm anliegenden, Detektionsleiter umfasst, wobei der Detektionsleiter zwischen Abschlusswiderstand und Detektionswiderstand verläuft. Für die elektro-magnetische Abschirmung eines Innenleiters kann auch ein metallischer Folienschirm, sprich eine dünne Metall- oder Verbundfolie, verwendet werden. Vorzugsweise enthält der Folienschirm Aluminium bzw. eine Aluminiumlegierung, wobei insbesondere Metallfolien aus Aluminium oder Verbundfolien mit einer Aluminiumschicht zum Einsatz kommen. Um den Folienschirm in einfacher Art und Weise kontaktieren zu können, insbesondere zum Anschluss an den Abschlusswiderstand bzw. den Detektionswiderstand, umfasst die Abschirmung in diesem Ausführungsbeispiel zumindest einen den Folienschirm kontaktierenden Detektionsleiter. Als Detektionsleiter ist beispielsweise ein unisolierter Beilaufdraht denkbar, welcher Beilaufdraht gemeinsam mit dem Folienschirm unterhalb des Kabelmantels verläuft und am Folienschirm anliegt. Entsprechend ist der Detektionsleiter zum Anschluss der Abschirmung an den Detektionswiderstand und den Abschlusswiderstand vorgesehen. Im Falle eines parallelen Lichtbogens kommt es auch bei dieser Ausführungsvariante zu einem niederohmigen durch das Plasma des Lichtbogens verursachten Kurzschluss, in der Regel zwischen dem den Innenleiter im Querschnitt umgebenden Folienschirm und dem Innenleiter. Da das sich bei einem derartigen Kurzschluss einstellende Potential durch die Kontaktierung von Detektionsleiter und Folienschirm, insbesondere durch das Anliegen des Detektionsleiters am Folienschirm, vom Detektionsleiter geleitet wird, ist auch in dieser Ausführungsvariante sichergestellt, dass der erste Fehlerzustand erkannt werden kann. Selbiges gilt natürlich auch für denn Fall, dass sich der Kurzschluss direkt im Bereich des Detektionsleiters ausbildet.

Um weitere Fehlerzustände auf Basis der Detektionsspannung in der Auswerteschaltung erkennen und zuordnen zu können, ist gemäß einer weiteren Ausführungsvariante vorgesehen, dass die Auswerteschaltung weiters ausgebildet ist, um
- einen zweiten Fehlerzustand zu erkennen, wenn die Detektionsspannung zwischen einer zweiten oberen Spannungsschwelle und einer Betriebsspannung liegt
   und/oder
- einen dritten Fehlerzustand zu erkennen, wenn die Detektionsspannung unterhalb einer dritten, den Regelbetriebs-Spannungsbereich nach unten begrenzenden, unteren Spannungsschwelle liegt.

Der zweite Fehlerzustand ("Kurzschluss Innenleiter/Abschirmung") liegt insbesondere dann vor, wenn es zu einem Kurzschluss zwischen Innenleiter und Abschirmung kommt, insbesondere bei einer mechanischen Beschädigung der Abschirmung. Dabei wird der Abschlusswiderstand durch den Kurzschluss überbrückt, sodass als Detektionsspannung eine im Wesentlichen der Betriebsspannung des Gleichspannungs-Bordnetzes entsprechende Spannung von der Auswerteschaltung erkannt wird. Entsprechend liegt die zweite obere Spannungsschwelle zwischen der ersten oberen Spannungsschwelle und der Betriebsspannung. Somit lässt sich in der Auswerteschaltung in einfacher Art und Weise unterscheiden, ob der erste Fehlerzustand ("paralleler Lichtbogen") oder der zweite Fehlerzustand ("Kurzschluss Innenleiter/Abschirmung") vorliegt. Mit anderen Worten kann durch eine entsprechende Auslegung während des Betriebs aufgrund der gemessenen Detektionsspannung überprüft werden, ob die als Sensorleiter ausgebildete Abschirmung fehlerfrei arbeitet oder ein sicherheitskritischer Lichtbogen ausgebildet ist.

Der dritte Fehlerzustand ("Kurzschluss Abschirmung/Masse") tritt insbesondere bei einem Kurzschluss zwischen der als Sensorleiter ausgebildeten Abschirmung und dem Grundpotential (Karosseriemasse) auf, wobei in diesem Fall kein Strom über den Detektionswiderstand fließt. Die dritte Spannungsschwelle liegt dabei in diesem Fall oberhalb von 0V und unterhalb der niedrigsten im Regelbetriebszustand zu erwartenden Detektionsspannung.

Der dritte Fehlerzustand kann auch auftreten, wenn lediglich ein Verbraucher an die Versorgungsleitung angeschlossen ist und der Abschlusswiderstand defekt oder nicht korrekt angeschlossen ist, sodass kein Strom über den Detektionswiderstand fließt.

Bei mehreren über entsprechende Abschlusswiderstände angeschlossenen Verbrauchern, wie nachfolgend an Hand weiterer Ausführungsvarianten im Detail diskutiert wird, entspricht ein gleichartiger Defekt einem Spannungsabfall unterhalb der unteren Spannungsschwelle. Liegt die Detektionsspannung demnach unterhalb des Regelbetriebs-Spannungsbereichs bzw. der entsprechend definierten unteren Spannungsschwelle, welche von der Anzahl der über entsprechende Abschlusswiderstände angeschlossen Verbraucher abhängig ist, so kann die Auswerteschaltung den dritten Fehlerzustand aufgrund der niedrigen Detektionsspannung bzw. Nullspannung zuordnen.

Die erfindungsgemäße Auswerteschaltung in Kombination mit dem Spannungsteiler ermöglicht somit eine genaue Erkennung verschiedener Fehlerzustände und entsprechende Zuordnung der Fehlerursachen. Während es vorteilhaft ist, alle drei Fehlerzustände mittels der Auswerteschaltung zu detektieren, ist es natürlich auch denkbar, nur eine Erkennung von erstem Fehlerzustand ("paralleler Lichtbogen") und zweitem Fehlerzustand ("Kurzschluss Innenleiter/Abschirmung") bzw. erstem Fehlerzustand ("paralleler Lichtbogen") und drittem Fehlerzustand ("Kurzschluss Abschirmung/Masse") vorzusehen.

Um mehrere Verbraucher mittels einer Versorgungsleitung mit Strom versorgen zu können und dennoch die erfindungsgemäßen Vorteile der Auswerteschaltung und des Spannungsteilers nutzen zu können, sieht eine weitere Ausführungsvariante der Erfindung vor, dass mehrere Verbraucher an der Versorgungsleitung angeschlossen sind, wobei jeder Verbraucher über einen separaten Abschlusswiderstand parallel an der als Sensorleiter ausgebildeten Abschirmung angeschlossen ist. In dieser Konfiguration erfolgt die Überwachung der Leitungsanordnung für mehrere Verbraucher gemeinsam über die als Sensorleiter ausgebildete Abschirmung und die Auswerteschaltung. Es soll dabei nicht unerwähnt bleiben, dass die Versorgungsleitung auch Verzweigungen, Gabelungen und/oder parallel verlaufende Abschnitte umfassen kann, sodass die Versorgungsleitung als Versorgungsnetz fungiert. Alle vorgenannten Fehlerzustände, zumindest aber der erste Fehlerzustand("paralleler Lichtbogen"), können somit auch für mehrere Verbraucher überwacht werden.

Gemäß einer weiteren Ausführungsvariante der Erfindung ist vorgesehen, dass die Auswerteschaltung weiters ausgebildet ist, um die Anzahl der an die Versorgungsleitung angeschlossenen Verbraucher zu bestimmen, wenn die Detektionsspannung innerhalb des Regelbetriebs-Spannungsbereichs liegt. Da sich die Detektionsspannung in Abhängigkeit der Anzahl der parallel angeschlossenen Abschlusswiderständen - sprich durch die Änderung des Gesamtwiderstands - verändert und vorzugsweise jeder angeschlossene Verbraucher über einen zugeordneten Abschlusswiderstand an der Sensorleitung angeschlossen ist, kann aufgrund der Höhe der Detektionsspannung direkt auf die Anzahl der Verbraucher geschlossen werden. Beispielsweise ist es dabei denkbar, dass in der Auswerteschaltung mehrere diskrete Vergleichswerte hinterlegt sind, die jeweils mit der zu erwartenden Detektionsspannung für eine konkrete Anzahl an Verbrauchern korreliert. So kann durch Vergleich der gemessenen Detektionsspannung mit den hinterlegten Vergleichsspannungen die Anzahl der Verbraucher bestimmt werden.

Diese zusätzliche Information über den aktuellen Betriebszustand kann für unterschiedliche Konstellationen relevant sein: Entspricht die aufgrund der anliegenden Detektionsspannung bestimmte Zahl der Verbraucher nicht einer erwarteten Anzahl an Verbrauchern, so liegt ein vierter Fehlerzustand ("Defekt Verbraucher") vor. Dieser kann beispielsweise - wie im Zusammenhang mit einem einzigen Verbraucher bereits erwähnt - auftreten, wenn der Abschlusswiderstand eines Verbrauchers oder mehrerer Verbraucher defekt oder nicht korrekt angeschlossen ist, sodass sich das Spannungsteiler-Verhältnis ändert. Dabei kann es vorteilhaft sein, dass die Auswerteschaltung ausgebildet ist, um mit einer Fahrzeugelektronik zu kommunizieren und im Fehlerfall entsprechende Signale an die Fahrzeugelektronik zu übermitteln. Die Auswertung des Fehlers und etwaige Gegenmaßnahmen können in diesem Fall von der Fahrzeugelektronik übernommen werden.

Grundsätzlich ist es denkbar, dass der elektrische Widerstand aller Abschlusswiderstände gleich groß ist, um eine möglichst einfache Erweiterbarkeit des Einsatzbereichs der Leitungsanordnung zu gewährleisten. Dies deshalb, weil zum Zwecke der zuvor beschriebenen Detektion der Anzahl der angeschlossenen Verbraucher keine zusätzlichen Anpassungsschritte erforderlich sind, sondern die Anzahl der Verbraucher unmittelbar von der Detektionsspannung ableitbar ist.

Um jedoch zu ermöglichen, dass mittels der Auswerteschaltung nicht nur die Anzahl der angeschlossenen Verbraucher bestimmbar ist, sondern im Falle der Erkennung des vierten Fehlerzustands auch erkannt werden kann, an welchem der Verbraucher kein Strom über den Abschlusswiderstand fließt, sieht eine weitere Ausführungsvariante der Erfindung vor, dass der elektrische Widerstand der separaten Abschlusswiderstände der einzelnen Verbraucher unterschiedlich groß ist. Aufgrund der unterschiedlich großen, geeignet gewählten, elektrischen Widerstände der Abschlusswiderstände, ist der detektierte Spannungsabfall der Detektionsspannung charakteristisch für jeden einzelnen Verbraucher bzw. gegebenenfalls auch für unterschiedliche Kombinationen von defekten Verbrauchern.

Besonders bevorzugt sind die elektrischen Widerstände der Abschlusswiderstände so gewählt, dass die Detektionsspannung unabhängig von der Anzahl an ausgefallenen Abschlusswiderständen und/oder unabhängig davon, welche Abschlusswiderstände ausgefallen sind, einen eindeutig zuordenbaren Wert aufweist, um den Fehlerzustand präzise erkennen zu können. Beispielsweise dürfen also im Falle dreier Abschlusswiderstände die Widerstände nicht so gewählt werden, dass der gleichzeitige Ausfall von erstem und zweitem Abschlusswiderstand dieselbe Detektionsspannung verursacht, die der Ausfall des dritten Abschlusswiderstands alleine verursachen würde.

Entsprechend kann die Auswerteschaltung auch ausgelegt sein, um im Falle der Erkennung des vierten Fehlerzustands unmittelbar festzustellen, welcher Verbraucher vom Defekt betroffen ist, ohne dass zusätzliche Informationen von der Fahrzeugelektronik oder einem Systembus erforderlich sind.

Es soll nicht unerwähnt bleiben, dass die erfindungsgemäße Leitungsanordnung durch entsprechende Gestaltung der Auswerteschaltung grundsätzlich dazu geeignet ist, neben dem ersten Fehlerzustand ("paralleler Lichtbogen") auch den zweiten Fehlerzustand ("Kurzschluss Innenleiter/Abschirmung") und/oder den dritten Fehlerzustand ("Kurzschluss Abschirmung/Masse") und/oder den vierten Fehlerzustand ("Defekt Verbraucher") sowie gegebenenfalls die Anzahl der Verbraucher basierend auf der Detektionsspannung bestimmen und auswerten bzw. zuordnen zu können.

In einer weiteren Ausführungsvariante der Erfindung ist vorgesehen, dass die Auswerteschaltung zumindest einen analogen Operationsverstärker umfasst. Die Verwendung von analogen Operationsverstärkern, insbesondere umfassend einen oder mehrere Komperatoren, eignet sich einerseits besonders gut für die Überwachung von oberen und/oder unteren Spannungsschwellen der Detektionsspannung und stellen andererseits eine besonders robuste und weitestgehend fehlerresistente Möglichkeit zur Überwachung und Auswertung der Detektionsspannung dar. In der Regel ist für jede zu überwachende Spannungsschwelle ein entsprechender Komperator im Operationsverstärker vorhanden bzw. sind mehrere Operationsverstärker vorgesehen. Insbesondere ist es vorteilhaft, wenn sicherheitskritische Fehlerzustände, vorzugsweise zumindest der erste Fehlerzustand ("paralleler Lichtbogen"), über einen analogen Operationsverstärker in der Auswerteschaltung abgesichert sind, um das Trennelement direkt ansteuern zu können, sodass der Stromkreis im Fehlerfall möglichst schnell und zuverlässig unterbrochen werden kann.

Während die Verwendung eines analogen Operationsverstärkers die oben genannten Vorteile in der Robustheit bewirkt, ist es dennoch erforderlich für jede zu überwachende Spannungsschwelle einen separaten Komperator vorzusehen. Daher sieht eine weitere Ausführungsvariante der Erfindung vor, dass die Auswerteschaltung eine mit einer Fahrzeugelektronik verbindbare digitale Auswerteeinheit umfasst und die Detektionsspannung das Eingangssignal der Auswerteeinheit bildet. Die Integration einer digitalen Auswerteeinheit, beispielsweise einen Mikrocontroller in die Auswerteschaltung bringt den Vorteil der flexiblen Auswertung der Detektionsspannung, die vorzugsweise als digitalisiertes Eingangssignal dient, um die erkannten Zustände an die Fahrzeugelektronik zur Fehlererkennung und weiteren Auswertung zu übermitteln. Somit können verschiedene Fehlerzustände in einfacher Art und Weise erkannt werden. Insbesondere ist es vorteilhaft, wenn nicht sicherheitsrelevante Zustände, vorzugsweise zumindest die Auswertung der Anzahl der Verbraucher, über die digitale Auswerteeinheit erfolgt.

Besonders bevorzugt ist in diesem Zusammenhang die Kombination des zuvor beschriebenen analogen Operationsverstärkers für die Erkennung sicherheitskritischer Fehlerzustände mit der zuvor beschriebenen digitalen Auswerteeinheit für nicht sicherheitskritische Zustände in der Auswerteschaltung. Dies kann insbesondere für autonome Fahrzeuge vorteilhaft sein, da sicherheitskritische Fehlerzustände robust abgesichert sind und eine möglichst genaue Überwachung des Betriebszustands über die Auswerteeinheit möglich ist.

Eine weitere Ausführungsvariante der Erfindung sieht vor, dass der zumindest eine Verbraucher, vorzugsweise jeder Verbraucher, mittels einer Steckverbindung mit der Versorgungsleitung verbunden ist, wobei der Abschlusswiderstand in die Steckverbindung integriert ist. Sind mehrere Verbraucher an die Versorgungsleitung angeschlossen, ist es vorteilhaft, wenn jeder Verbraucher über eine separate Steckverbindung angebunden ist und die den Verbrauchern zugeordneten Abschlusswiderstände in die jeweiligen Steckverbindungen integriert sind. Da viele Verbraucher herkömmlicher Weise über eine an ihrem Gehäuse angebrachten Steckverbindung mit dem Gleichspannungs-Bordnetz verbindbar sind, ist es vorteilhaft, den Abschlusswiderstand in diese Steckverbindung zu integrieren. Insbesondere wenn der Abschlusswiderstand in den der Versorgungsleitung zugeordneten Teil der Steckverbindung integriert ist, ist keine Modifikation der Verbraucher erforderlich. Wird der Abschlusswiderstand in den dem Versorger zugeordneten Teil der Steckverbindung integriert, ist ebenfalls keine Modifikation des Verbrauchers selbst, sondern lediglich der Steckverbindung, beispielsweise durch einen Zwischenstecker, erforderlich.

Besonders vorteilhaft ist es, wenn der Abschlusswiderstand derart in die Steckverbindung integriert ist, dass der Innenleiter nur mit dem Abschlusswiderstand kontaktiert ist, wenn die Steckverbindung geschlossen ist. Durch diese Ausbildung kann in einfacher Art und Weise sichergestellt werden, dass die Anzahl der angeschlossenen Verbraucher an die als Sensorleiter ausgebildete Abschirmung mit der Detektionsspannung korreliert.

Um einen modulartigen Aufbau der Leitungsanordnung zu ermöglichen, insbesondere die einfache Integration einer erfindungsgemäßen Versorgungsleitung samt Sicherheitselektronik in ein vorgegebenes Gleichspannungs-Bordnetz eines Fahrzeugs, sieht eine weitere Ausführungsvariante der Erfindung vor, dass der Detektionswiderstand in die Sicherheitselektronik integriert ist. Besonders vorteilhaft ist für den modulartigen Aufbau zusätzlich die zuvor erwähnte Integration des Abschlusswiderstands in die Steckverbindung.

Als besonders vorteilhaft für die Definition der Spannungsschwellen hat es sich erwiesen, wenn der elektrische Widerstand des Detektionswiderstands zumindest eine Größenordnung größer als der Lastwiderstand des zumindest einen Verbrauchers ist und/oder der Abschlusswiderstand zumindest zwei Größenordnungen größer als der Lastwiderstand des zumindest einen Verbrauchers ist. Insbesondere wenn beide Bedingungen erfüllt sind, kann ein verhältnismäßig breiter Regelbetriebs-Spannungsbereich mit relativ scharf abgrenzbaren Spannungsschwellen definiert werden. Gleichfalls wird der Stromfluss über die als Sensorleiter ausgebildete Abschirmung gering gehalten, sodass auch die Verluste möglichst minimiert werden.

Es soll dabei nicht unerwähnt bleiben, dass die Grenzen zwischen den Größenordnungen fließend verlaufen können und nicht zwangsläufig als scharfe Grenzen anzusehen sind. Gleichfalls sind auch abweichende Dimensionierungen denkbar, wobei jedenfalls die Abstufung der elektrischen Widerstände in der nachfolgend angegebenen Reihenfolge Leitungswiderstand < Lastwiderstand < Detektionswiderstand < Abschlusswiderstand eingehalten werden sollte.

In einer weiteren Ausführungsvariante der Erfindung ist vorgesehen, dass die Sicherheitselektronik quellenseitig ein stromstärkenabhängig selbstauslösendes Sicherungselement, vorzugsweise eine Schmelzsicherung, aufweist. Um den Stromkreis zu unterbrechen, wenn im Leitungssystem Ströme fließen, die erheblich höher sind als die zu erwartenden Ströme, wie beispielsweise im Falle eines Kurzschlusses zwischen dem Innenleiter und dem Grundpotential (Karosseriemasse), ist ein stromstärkenabhängig selbstauslösendes Sicherungselement vorgesehen. Bevorzugt werden entsprechend dimensionierte Schmelzsicherungen als derartig ausgebildete Sicherungselemente verwendet.

Grundsätzlich ist es denkbar, dass mehrere Versorgungsleitungen zwischen der Stromquelle und den jeweils angeschlossenen Verbrauchern im Gleichspannungs-Bordnetz vorgesehen sind, wobei jede Versorgungsleitung über eine separate Auswerteschaltung und gegebenenfalls eine eigenes Trennelement abgesichert sind.

Um jedoch die Verbraucher auf mehrere Zweige der Versorgungsleitung aufzuteilen und dennoch die gemeinsame Absicherung mittels einer zentralen Auswerteschaltung zur Detektion der Fehlerzustände zu ermöglichen, jedoch im Fehlerfall nur bestimmte Verbraucher bzw. einen bestimmten oder mehrere bestimmte Zweige von der Stromquelle zu trennen, ist gemäß einer weiteren Ausführungsvariante der Erfindung vorgesehen, dass die Versorgungsleitung zumindest zwei Zweige umfasst, wobei an jedem Zweig zumindest ein Verbraucher angeschlossen ist, und wobei das ansteuerbare Trennelement ausgebildet ist, um jeden Zweig separat von der Stromquelle zu trennen. Unter einem Zweig ist dabei ein zwischen Trennelement und zumindest einem Verbraucher verlaufender Abschnitt der Versorgungsleitung zu verstehen, wobei mehrere Zweige parallel zueinander verlaufen angeordnet sein können. An einem Zweig können auch mehrere Verbraucher angeschlossen sein.

Für die Funktion der zentralen Auswerteschaltung ist es erforderlich, dass jeder Verbraucher über einen Abschlusswiderstand an der als Sensorleitung ausgebildeten Abschirmung angeschlossen ist, wobei alle Sensorleitungen an den Detektionswiderstand angeschlossen sind.

Die Auswahl, welcher Zweig im Fehlerfall durch das Trennelement von der Stromquelle getrennt wird, kann beispielsweise vordefiniert und in der Sicherheitselektronik hinterlegt sein, sodass Zweige mit zuvor definierten nicht sicherheitskritischen Verbrauchern zuerst von der Stromquelle getrennt werden bevor die Stromzufuhr an sicherheitskritische Verbraucher unterbunden wird. Gegebenenfalls kann auch eine zusätzliche Information der Fahrzeugelektronik, insbesondere eines Systembusses, der Auswahl zugrunde gelegt werden.

Vorteilhaft ist es jedoch, wenn - wie zuvor beschrieben - die den Verbrauchern zugeordneten Abschlusswiderstände unterschiedlich groß sind, sodass die Auswerteschaltung ohne zusätzliche Information der Fahrzeugelektronik über die entsprechende charakteristische Spannungsänderung feststellen kann, welcher Zweig vom Fehlerzustand betroffen ist und die Stromzufuhr des entsprechenden Zweigs trennen kann.

Grundsätzlich ist der Einsatz der erfindungsgemäßen Leitungsanordnung in Gleichspannungs-Bordnetzen unterschiedlicher Betriebsspannung möglich. Bevorzugt wird die erfindungsgemäße Leitungsanordnung in Gleichspannungs-Bordnetzen mit einer Betriebsspannung über 20V eingesetzt, jedoch nicht bei Hochvoltsystemen mit Betriebsspannungen über 400V. Insbesondere liegt der Einsatzbereich für die erfindungsgemäße Leitungsanordnung bei Betriebsspannungen zwischen 30V und 100V. Besonders bevorzugt ist der Einsatz der erfindungsgemäßen Leitungsanordnung in einem Gleichspannungs-Bordnetz mit einer Betriebsspannung von 48V (48V Gleichspannungs-Bordnetz).

Entsprechend wird die eingangs erwähnte Aufgabe auch durch die Verwendung einer erfindungsgemäßen Leitungsanordnung in einem Gleichspannungs-Bordnetz eines Kraftfahrzeugs mit einer Betriebsspannung größer 20V, insbesondere mit einer Betriebsspannung von 48V, gelöst.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1a: einen Querschnitt eines ersten Ausführungsbeispiels eines Kabelaufbaus für die Versorgungsleitung;
- Fig. 1b: eine axonometrische Ansicht einer abschnittsweise freigelegten Versorgungsleitung gemäß Fig. 1a;
- Fig. 2a: einen Querschnitt eines zweiten Ausführungsbeispiels eines Kabelaufbaus für eine Versorgungsleitung;
- Fig. 2b: eine axonometrische Ansicht einer abschnittsweise freigelegten Versorgungsleitung gemäß Fig. 2a;
- Fig. 3: ein erstes Ausführungsbeispiel der Leitungsanordnung mit einem Verbraucher;
- Fig. 4: ein zweites Ausführungsbeispiel der Leitungsanordnung mit einem Verbraucher;
- Fig. 5: ein drittes Ausführungsbeispiel der Leitungsanordnung mit mehreren Verbrauchern;
- Fig. 6: eine schematische Übersicht der Spannungsschwellen der Detektionsspannung.

### WEGE ZUR AUSFÜHRUNG DER ERFINDUNG

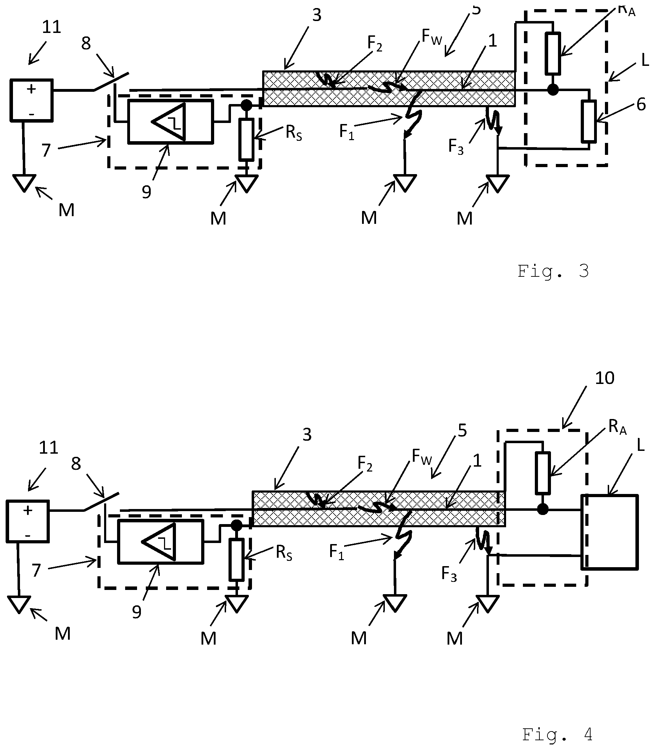

Die Funktionsweise nachfolgend anhand der Figuren 3 bis 5 diskutierten Leitungsanordnungen setzt voraus, dass eine Versorgungsleitung 5 eine Stromquelle 11 mit einem Verbraucher L (vgl. Fig. 3) verbindet, wobei die Versorgungsleitung 5 eine Abschirmung 3 aufweisen muss und zumindest Stromquelle 11 und Verbraucher L an einem Grundpotential M, beispielsweise einer Karosseriemasse, angeschlossen sind. Eine Abschirmung 3 ist üblicher Weise zur Abschirmung des Innenleiters 1 gegenüber elektromagnetischer Strahlung ausgelegt, jedoch ist für die gegenständliche Erfindung vorgesehen, dass die Abschirmung 3 selbst stromführend ausgebildet ist. Dabei ist für die nachfolgend beschriebenen Ausführungsbeispiele die Leitungsanordnung so konzipiert, dass der durch die Abschirmung 3 fließende Strom um mehrere Größenordnungen kleiner ist als der durch den Innenleiter 1 fließende Strom.

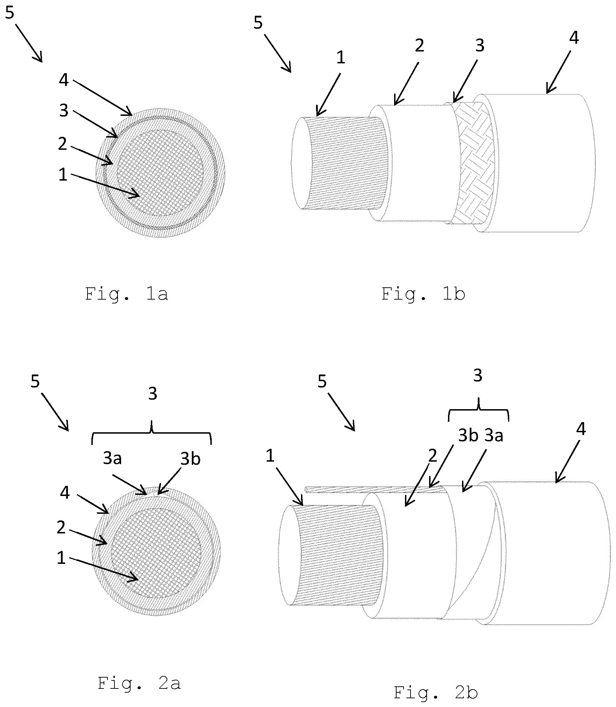

In den Figuren 1a und 1b ist ein erstes Ausführungsbeispiel einer Versorgungsleitung 5 dargestellt, die sich für den Einsatz in der erfindungsgemäßen Leitungsanordnung eignet. Die Versorgungsleitung weist dabei einen Innenleiter 1 und eine als Schirmgeflecht ausgebildete Abschirmung 3 auf, welche den Innenleiter 1 umgibt. In radialer Richtung ist zwischen dem Innenleiter 1 und der Abschirmung eine innere Isolationsschicht 2 vorgesehen, welche Innenleiter 1 und Abschirmung 3 elektrisch gegeneinander isoliert. Die als Schirmgeflecht ausgebildete Abschirmung 3 wird von einem Kabelmantel 4 umhüllt, der in der Regel aus Kunststoff gefertigt ist. Das Schirmgeflecht ist vorzugsweise dünnmaschig ausgebildet, um die Materialkosten und das Gewicht der Versorgungsleitung zu reduzieren. Das Schirmgeflecht ist üblicherweise als Metallgeflecht, insbesondere als Kupfer- oder Aluminiumgeflecht, ausgebildet.

In den Figuren 2a und 2b ist ein zweites Ausführungsbeispiel einer Versorgungsleitung 5 dargestellt, welches sich durch den Aufbau der Abschirmung 3 vom ersten Ausführungsbeispiel unterscheidet. Im vorliegenden Ausführungsbeispiel umfasst die Abschirmung 3 einen metallischen Folienschirm 3a, beispielsweise eine metallischen Schirmfolie oder ein Kunststofffolien und Metallfolien enthaltender Aufbau, sowie einen Detektionsleiter 3b. Der Folienschirm 3a bildet jenen Teil der Abschirmung 3, der den Innenleiter 1 umgibt. Die Funktion des Detektionsleiters 3b wird in der Folge näher erläutert. Um sicherzustellen, dass Folienschirm 3a und Detektionsleiter 3b einander elektrisch kontaktieren, ist der Detektionsleiter 3b im vorliegenden Ausführungsbeispiel als nicht isolierter metallischer Draht ausgebildet, der zwischen erster Isolationsschicht 2 und Folienschirm 3a verläuft. Während im vorliegenden Ausführungsbeispiel genau ein Detektionsleiter 3b vorgesehen ist, so können in alternativen Ausführungsbeispielen auch zwei, drei oder mehrere Detektionsleiter 3b vorgesehen sein.

Es versteht sich dabei von selbst, dass das erfindungsgemäße Prinzip auch auf Versorgungsleitungen 5 mit unterschiedlichem Aufbau als dem der beiden exemplarisch beschriebenen anwendbar ist. So ist es beispielsweise auch denkbar, dass Innenleiter 1 und Abschirmung 3 exzentrisch zueinander angeordnet sind oder dass zwischen Innenleiter 1 und Abschirmung 3 ein Außenleiter verläuft, wobei letzterer Aufbau auch Triaxial-Kabel genannt wird.

Figur 3 zeigt einen schematischen Aufbau eines ersten Ausführungsbeispiels einer erfindungsgemäßen Leitungsanordnung, die vorzugsweise in ein Gleichspannungs-Bordnetz eines Kraftfahrzeuges, insbesondere ein 48V Gleichspannungs-Bordnetz, integrierbar ist. Die Leitungsanordnung umfasst eine Versorgungsleitung 5, welche zumindest einen Innenleiter 1 und eine Abschirmung 3 umfasst, welche Versorgungsleitung 5 einen Verbraucher L mit einer Stromquelle 11 verbindet. Zwischen Stromquelle 11 und Versorgungsleitung 5 ist ein Trennelement 8 geschaltet, welches ausgebildet ist, die Versorgungsleitung 5 von der Stromquelle 11 zu trennen. Zu diesem Zwecke ist das Trennelement 8 von einer Sicherheitselektronik 7 ansteuerbar ausgebildet, um in Abhängigkeit von einer Auswertung in der Sicherheitselektronik 7 den Stromfluss zu unterbrechen bzw. wiederherzustellen. Die Sicherheitselektronik 7 ist dabei quellenseitig, sprich in unmittelbarer Nähe der Stromquelle bzw. in jenem Bereich angeordnet, in welchem die Versorgungsleitung 5 mit der Stromquelle 11 verbunden ist.

Vorteilhafter Weise kann die Sicherheitselektronik 7 in die Stromquelle 11, beispielsweise eine Fahrzeugbatterie, integriert sein. Die Sicherheitselektronik 7 kann darüber hinaus auch in eine elektronische Sicherheitsplattform für Kraftfahrzeuge oder in eine sogenannte Power Control Unit [PCU] eines Kraftfahrzeugs integriert sein. Es versteht sich dabei von selbst, dass die gezeigten Darstellungen lediglich schematisch zu verstehen sind. Bei dem Verbraucher L handelt es sich in der Regel um ein komplexes elektronisches Bauteil, etwa ein Lastaggregat, welches im Fahrzeug eine spezifische Funktion erfüllt. Im dargestellten Ausführungsbeispiel umfasst der Verbraucher L zum Zwecke der besseren Darstellbarkeit einen repräsentativen bzw. komplexen Lastwiderstand 6.

Die gegenständliche Erfindung beruht im Wesentlichen auf zwei synergistisch zusammenwirkenden Aspekten, nämlich einerseits auf der Ausnützung einer herkömmlichen bzw. gegebenenfalls leicht modifizierten Abschirmung 3 als Sensorleiter und andererseits auf der Integration und Verschaltung einer Auswerteschaltung 9 in die Sicherheitselektronik 7.

Um die Abschirmung 3 als Sensorleiter zu nutzen, welcher vorzugsweise den überwiegenden Großteil der Länge der Versorgungsleitung 5 zwischen Verbraucher L und Stromquelle 11 abdeckt, ist die Abschirmung 3 über einen Abschlusswiderstand R_{A} lastseitig an den Innenleiter 1 angeschlossen und quellenseitig über einen Detektionswiderstand R_{S} an das Grundpotential M angeschlossen. Im vorliegenden Ausführungsbeispiel ist der Abschlusswiderstand R_{A} dabei in den Verbraucher L integriert.

Wenngleich es denkbar ist, dass die als Sensorleiter ausgebildete Abschirmung 3 durch zusätzliche Maßnahmen weiterhin ihre elektro-magnetische Schirmfunktion ausübt, liegt das Hauptaugenmerk der Abschirmung 3 im Lichte der gegenständlichen Erfindung auf der Funktion der Abschirmung 3 als Sensorleiter. Beispielsweise könnte als zusätzliche Maßnahme eine Kapazität parallel zum Detektionswiderstand R_{S} und/oder eine Kapazität lastseitig auf Masse geschaltet werden, um für höhere Frequenzen, wie sie beispielsweise bei gepulstem Betrieb von Invertern auftreten (bzw. auf die Versorgungsleitung 5 rückwirken) können, eine ausreichende Schirmwirkung zu erzielen.

Der Abschlusswiderstand R_{A} ist dabei gegenüber dem Lastwiderstand 6 des Verbrauchers L hochohmig ausgelegt, also so dimensioniert, dass der elektrische Widerstand mehrere Größenordnungen über der Bezugsgröße liegt. In einem 48V Gleichspannungs-Bordnetz kann beispielsweise vorgesehen sein, dass der Lastwiderstand 6 in der Größenordnung von 1-10 Ohm liegt, während der Abschlusswiderstand R_{A} in der Größenordnung von 10 kOhm liegt.

Da die als Sensorleiter fungierende Abschirmung 3 über den Detektionswiderstand R_{S} am Grundpotential M und lastseitig über den Abschlusswiderstand R_{A} an den Innenleiter 1 angeschlossen sind, sind Abschlusswiderstand R_{A} und Detektionswiderstand R_{S} in Serie geschaltet und fungieren als Spannungsteiler. Der Detektionswiderstand R_{S} ist gegenüber dem Abschlusswiderstand R_{A} niederohmig ausgelegt, also so dimensioniert, dass der elektrische Widerstand zumindest eine Größenordnung unterhalb der Bezugsgröße liegt. In einem 48V Gleichspannungs-Bordnetz kann beispielsweise vorgesehen sein, dass der elektrische Widerstand des Abschlusswiderstands R_{A} in der Größenordnung von 10 kOhm liegt, während der elektrische Widerstand des Detektionswiderstands R_{S} zwischen 100 und 1.000 Ohm, insbesondere im Bereich von 500 Ohm liegt. Der elektrische Widerstand des Detektionswiderstands R_{S} liegt damit auch zwischen einer und drei Größenordnungen über dem Lastwiderstand 6.

Dadurch, dass die Abschirmung 3 der im vorliegenden Ausführungsbeispiel als Koaxialkabel ausgebildeten Versorgungsleitung 5 als Sensorleiter ausgebildet ist, ist eine kostengünstige Herstellung und unaufwändige Integration möglich, da beispielsweise lediglich geringfügige Modifikation an bestehenden Kabeln erforderlich sind, etwa die Hinzunahme eines Detektionsleiters 3b im zweiten Ausführungsbeispiel des Versorgungsleiters 5, bzw. standardmäßige Lösungen zur Kontaktierung von Innenleiter 1 und Abschirmung 3 herangezogen werden können.

Dadurch, dass die Abschirmung 3 den Innenleiter 1 im Querschnitt gesehen im Wesentlichen vollumfänglich umgibt, können Fehlerzustände, insbesondere ein erster Fehlerzustand F1, bei welchem sich ein paralleler Lichtbogen zwischen Innenleiter 1 und Grundpotential M, etwa einem Karosserieteil, ausbildet, detektiert und erkannt werden. Eine detaillierte Beschreibung der Funktionsweise folgt.

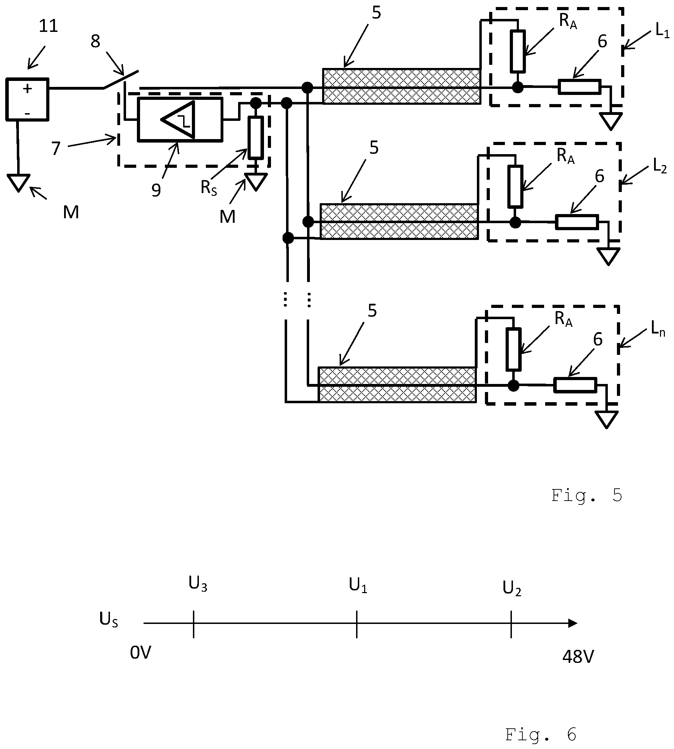

Der zweite Aspekt der Erfindung betrifft die Auswerteschaltung 9, welche in die Sicherheitselektronik 7 integriert ist. Als Eingangssignal der Auswerteschaltung 9 dient eine Detektionsspannung U_{S} (siehe Fig. 6), welche am Detektionswiderstand R_{S} abgegriffen wird. Im vorliegenden Ausführungsbeispiel ist der Detektionswiderstand R_{S} in die Sicherheitselektronik 7 integriert, wobei es auch denkbar ist, dass der Detektionswiderstand R_{S} in alternativen Ausführungsvarianten außerhalb der Sicherheitselektronik 7 angeordnet ist und lediglich an die Auswerteschaltung 9 angeschlossen sein. Die Auswerteschaltung 9 ist dabei ausgelegt, um das Trennelement 8 anzusteuern, um im Falle der Detektion eines Fehlerzustands F den Stromkreis zu unterbrechen, um so einen sicherheitskritischen Zustand ehest möglich zu entschärfen. Um die Sicherheit der Leitungsanordnung während des Betriebs weiter zu erhöhen, kann auch ein stromstärkenabhängiges selbstauslösendes Sicherheitselement, etwa eine Schmelzsicherung, zwischen Stromquelle 11 und Versorgungsleitung 5, besonders bevorzugt zwischen Stromquelle 11 und Trennelement 8, angeordnet sein.

Die Auswerteschaltung 9 kann entweder rein analog oder rein digital ausgebildet sein. Vorzugsweise enthält die Auswerteschaltung 9 jedoch sowohl analoge Komponenten, insbesondere Operationsverstärker bzw. Komperatoren, als auch digitale Komponenten, etwa eine digitale Auswerteeinheit, die mit einer Fahrzeugelektronik verbindbar ist. So können beispielsweise einerseits sicherheitskritische Zustände über analoge Komponenten sicher erkannt und entsprechend reagiert werden, während über digitale Komponenten weniger sicherheitskritische Informationen erkannt und beispielsweise an eine Fahrzeugelektronik zur Auswertung weitergeben werden können.

Das in Figur 4 gezeigte Ausführungsbeispiel unterscheidet sich lediglich in einem konstruktiven Detail vom zuvor diskutierten Ausführungsbeispiel: Während im ersten Ausführungsbeispiel der Abschlusswiderstand R_{A} in den Verbraucher L integriert ist, ist der Abschlusswiderstand R_{A} im vorliegenden zweiten Ausführungsbeispiel in eine Steckverbindung 10 integriert, die zum Anschluss der Versorgungsleitung 5 an den Verbraucher L dient. Durch diesen Aufbau ist keine konstruktive Modifikation des Verbrauchers L erforderlich, sondern lediglich die Modifikation der Steckverbindung 10, sodass beliebige Verbraucher L in die Leitungsanordnung integriert werden können.

Wenngleich zuvor lediglich Leitungsanordnungen beschrieben wurden, bei denen jeweils ein einzelner Verbraucher L mittels einer Versorgungsleitung 5 an die Stromquelle 11 angebunden sind, ist die erfindungsgemäße Leitungsanordnung beliebig für mehrere Verbraucher L_{1...n} erweiterbar und lässt sich auch in einem Leitungsnetz einsetzen, bei dem mehrere Versorgungsleitungen 5 eingesetzt werden und/oder eine Versorgungsleitung 5 mehrere Äste, Gabelungen oder parallele Abschnitte umfasst.

Entsprechend zeigt Figur 5 eine Leitungsanordnung, bei der ein erster Verbraucher L₁, ein zweiter Verbraucher L₂ und ein n-ter Verbraucher Lₙ vorgesehen sind. Jeder Verbraucher L_{1...n} umfasst wieder einen repräsentativen Lastwiderstand 6, wobei die elektrischen Widerstände der einzelnen Lastwiderstände 6 selbstverständlich unterschiedlich groß sein können. Um die Funktionalität der Auswerteschaltung 9 zu gewährleisten, ist jeder Verbraucher L_{1...n} über einen separaten Abschlusswiderstand R_{A} parallel an der als Sensorleitung ausgebildeten Abschirmung 3 angeschlossen. In anderen Worten ist der Innenleiter 1 der Versorgungsleitung 5 mit dem jeweiligen Verbraucher L_{1...n} verbunden und ist der Innenleiter 1 im Bereich des Verbrauchers L_{1...n} über einen Abschlusswiderstand R_{A} mit der Abschirmung 3 gekoppelt.

Im dargestellten Ausführungsbeispiel umfasst die Versorgungsleitung 5 mehrere parallele Abschnitte, die jeweils die Stromquelle 11 mit einem Verbraucher Lₙ verbinden. Es ist dabei denkbar, dass der Kabelaufbau der parallelen Abschnitte für einzelne Abschnitte unterschiedlich ausgebildet sein kann.

In alternativen Ausführungsbeispielen kann auch vorgesehen sein, dass die Versorgungsleitung 5 mehrere Zweige umfasst, wobei ein Zweig jeweils zwischen dem Trennelement 8 und zumindest einem Verbraucher L verläuft, wobei das Trennelement 8 ausgebildet ist, einzelne Zweige von der Stromquelle 11 zu trennen.

In weiteren alternativen Ausführungsbeispielen kann weiters vorgesehen sein, dass mehrere Leitungsanordnungen an eine gemeinsame Stromquelle 11 angebunden sind und für mehrere Leitungsanordnungen jeweils eine Auswerteschaltung 9 in eine gemeinsame Sicherheitselektronik 7 eingebunden sind.

Während im gezeigten Ausführungsbeispiel die Abschlusswiderstände R_{A}, wie beim ersten Ausführungsbeispiel, als in den Verbraucher L_{1...n} integriert darstellt sind, können die Abschlusswiderstände R_{A} natürlich auch in Steckverbindungen 10 integriert sein, wobei auch Kombinationen denkbar sind. Durch die Parallelschaltung der Abschlusswiderstände R_{A} ändert sich auch das Spannungsteiler-Verhältnis mit dem in Serie geschalteten Detektionswiderstand R_{S}, sodass die Auswerteschaltung 9 - wie nachfolgend erörtert - auch die Anzahl der angeschlossenen Verbraucher L_{1...n} überprüfen bzw. feststellen kann. Während es grundsätzlich denkbar ist, dass die Abschlusswiderstände R_{A} der einzelnen Verbraucher L_{1...n} gleich groß sind, hat es sich als vorteilhaft erwiesen, wenn die Abschlusswiderstände R_{A} unterschiedliche elektrische Widerstände aufweisen, sodass - wie in der Folge beschrieben - in der Auswerteschaltung 9 eruiert werden kann, in welchem Zweig der Versorgungsleitung 5 ein Abschlusswiderstand R_{A} nicht korrekt Verbraucher Lₙ.

### FUNKTIONSWEISE DER ERFINDUNG

Anhand der Figur 6 soll die Funktionsweise der Auswerteschaltung 9 am Beispiel eines 48V Gleichspannungs-Systems eines Fahrzeugs mit mehreren Verbrauchern L_{1...n} dargelegt werden, wobei die einzelnen beschriebenen Fehlerzustände in den Figuren 3 und 4 bildlich als einen Kurzschluss symbolisierende "Blitze" dargestellt sind.

Aufgrund der Dimensionierung von Abschlusswiderstand R_{A} und Detektionswiderstand R_{S} lässt sich für den Regelbetriebszustand ein Regelbetriebs-Spannungsbereich definieren, in dem die Detektionsspannung U_{S} liegt, wenn kein Fehlerzustand F vorliegt. Dieser Regelbetriebs-Spannungsbereich wird durch eine erste obere Spannungsschwelle U₁ nach oben hin und durch eine dritte untere Spannungsschwelle U₃ nach unten hin begrenzt.

Die dritte untere Spannungsschwelle U₃ liegt in der Regel knapp unterhalb jener Detektionsspannung U_{S}, die bei einem einzigen über einen Abschlusswiderstand R_{A} an der als Sensorleiter ausgebildeten Abschirmung 3 angeschlossenen Verbraucher L zu erwarten ist. Beispielsweise kann die dritte untere Spannungsschwelle U₃ etwa im Bereich von 2V liegen.

Je nachdem wie viele Verbraucher L_{1...n} über einen Abschlusswiderstand R_{A} an der als Sensorleiter ausgebildeten Abschirmung 3 angeschlossen sind, steigt die von der Auswerteschaltung 9 abgegriffene Detektionsspannung U_{S}. Somit kann aus der Höhe der Detektionsspannung U_{S} auf die Anzahl der Verbraucher L_{1...n} zurückgeschlossen werden. Ändert sich die Detektionsspannung U_{S} während des Betriebs, ohne dass die dritte untere Spannungsschwelle U₃ unterschritten wird, so kann beispielsweise auf einen fehlerhaften Anschluss eines Verbrauchers L, insbesondere auf eine defekte oder nicht ordnungsgemäße Steckverbindung 10, geschlossen werden. Sind die den jeweiligen Verbrauchern L zugeordneten Abschlusswiderstände R_{A} individualisiert, so kann über den Unterschied in der Detektionsspannung U_{S} vor dem Fehlerzustand und während des Fehlerzustands auch von der Auswerteschaltung 9 erkannt werden, an welchem Verbraucher L der fehlerhafte Anschluss vorliegt.

Die erste obere Spannungsschwelle U₁ charakterisiert einen Spannungswert, der höher ist als bei der größten anzunehmenden Anzahl an Verbraucher L_{1...n}, sodass bei einem Überschreiten der ersten oberen Spannungsschwelle U₁ ein Fehlerzustand vorliegen muss. Beispielsweise kann bei einer Betriebsspannung von 48V die erste Spannungsschwelle U₁ im Bereich von zwischen 10V und 20V, insbesondere zwischen 20% und 40% der Betriebsspannung, liegen.

Vorteilhaft ist es dabei auch, wenn eine zweite obere Spannungsschwelle U₂ definiert ist, die zwischen erster oberer Spannungsschwelle U₁ und der Betriebsspannung, im vorliegenden Fall 48V, liegt, um verschiedene Fehlerzustände unterscheiden zu können. Besonders bevorzugt liegt die zweite obere Spannungsschwelle U₂ bei etwa 40V, insbesondere oberhalb von 80% der Betriebsspannung.

In einer exemplarischen Leitungsanordnung, für welche die oben genannten Spannungsschwellen einstellbar sind, beträgt der Lastwiderstand 6 zwischen 1 und 10 Ohm während der Abschlusswiderstand R_{A} im Bereich von 10 kOhm und der Detektionswiderstand R_{S} im Bereich von 500 Ohm liegt.

Aufgrund der entsprechend abgegriffenen Detektionsspannung U_{S} lassen sich folgende Fehlerzustände in der Auswerteschaltung 9 unterscheiden:
erster Fehlerzustand F₁ ("paralleler Lichtbogen"):
Der erste Fehlerzustand F₁ wird dann von der

Auswerteschaltung 9 erkannt, wenn die Detektionsspannung U_{S} oberhalb der ersten oberen Spannungsschwelle U₁ liegt. Wenn auch eine zweite obere Spannungsschwelle U₂ (siehe zweiter Fehlerzustand F₂) definiert ist, dann wird der erste Fehlerzustand F₁ erkannt, wenn die Detektionsspannung U_{S} zwischen der ersten oberen Spannungsschwelle U₁ und unterhalb der zweiten oberen Spannungsschwelle U₂ liegt.

Kommt es zu einem parallelen niederohmigen Kurzschluss zwischen Innenleiter 1 und Grundpotential M, erfolgt im ersten Fehlerzustand F₁ ein niederohmiger Kurzschluss über das Plasma des Lichtbogens zwischen Innenleiter 1 und der als Sensorleiter ausgebildeten Abschirmung 3. Dieser Kurzschluss wirkt parallel zum lastseitigen Abschlusswiderstand R_{A}, sodass sich das Spannungsteiler-Verhältnis ändert und der Lichtbogen als erster Fehlerzustand F₁ durch die höhere, die erste obere Spannungsschwelle U₂ überschreitende, Detektionsspannung U_{S} erkannt werden kann. Dadurch, dass die Abschirmung 3, unabhängig davon, ob sie als Schirmgeflecht oder als Folienschirm 3a ausgebildet ist, den Innenleiter 1 umgibt, kann der parallele Lichtbogen unabhängig von der konkreten Position des Auftretens relativ zur Versorgungsleitung 5 detektiert werden. Wenn die Abschirmung 3 einen Folienschirm 3a und zumindest einen Detektionsleiter 3b umfasst, so tritt der niederohmige Kurzschluss über das Plasma des Lichtbogens in der Regel zwischen Folienschirm 3a und Innenleiter 3b auf, während der am Detektionswiderstand R_{S} angeschlossene und am Folienschirm 3a anliegende zumindest eine Detektionsleiter 3b zur Spannungsübertragung dient. Über die Auswerteschaltung 9 kann als Resultat des erkannten ersten Fehlerzustands F₁ beispielsweise das Trennelement 8 angesteuert werden, um den Stromkreis zu unterbrechen.

### zweiter Fehlerzustand F₂ ("Kurzschluss

### Innenleiter/Abschirmung")

Der zweite Fehlerzustand F₂ wird dann von der

Auswerteschaltung 9 erkannt, wenn die Detektionsspannung U_{S} oberhalb der zweiten oberen Spannungsschwelle U₂ liegt.

Der zweite Fehlerzustand F₂ liegt insbesondere dann vor, wenn es zu einem Kurzschluss zwischen Innenleiter 1 und Abschirmung 3 kommt, insbesondere bei einer mechanischen Beschädigung der Abschirmung 3. Dabei wird der Abschlusswiderstand R_{A} durch den Kurzschluss überbrückt, sodass als Detektionsspannung U_{S} eine im Wesentlichen der Betriebsspannung des Gleichspannungs-Bordnetzes entsprechende Spannung von der Auswerteschaltung 9 erkannt wird. Somit lässt sich in der Auswerteschaltung 9 in einfacher Art und Weise unterscheiden, ob der erste Fehlerzustand F₁ oder der zweite Fehlerzustand F₂ vorliegt. Mit anderen Worten kann durch eine entsprechende Auslegung während des Betriebs aufgrund der gemessenen Detektionsspannung U_{S} überprüft werden, ob die als Sensorleiter ausgebildete Abschirmung 3 fehlerfrei arbeitet.

### dritter Fehlerzustand F₃ ("Kurzschluss Abschirmung/Masse")

Der dritte Fehlerzustand F₃ wird dann von der Auswerteschaltung 9 erkannt, wenn die Detektionsspannung U_{S} unterhalb der dritten unteren Spannungsschwelle U₃ liegt.

Der dritte Fehlerzustand F₃ tritt insbesondere bei einem Kurzschluss zwischen der als Sensorleiter ausgebildeten Abschirmung 3 und dem Grundpotential M auf, in welchem Fall kein Strom über den Detektionswiderstand R_{S} fließt. Der dritte Fehlerzustand F₃ kann auch auftreten, wenn lediglich ein Verbraucher an die Versorgungsleitung angeschlossen ist und der Abschlusswiderstand R_{A} defekt oder nicht korrekt angeschlossen ist, sodass kein Strom über den Detektionswiderstand R_{S} fließt. Bei mehreren über entsprechende Abschlusswiderstände R_{A} angeschlossenen Verbrauchern L_{1...n} entspricht ein gleichartiger Defekt einem Spannungsabfall unterhalb der unteren Spannungsschwelle U₃. Liegt die Detektionsspannung U_{S} demnach unterhalb des Regelbetriebs-Spannungsbereichs bzw. der entsprechend definierten unteren Spannungsschwelle U₃, so kann die Auswerteschaltung 9 den dritten Fehlerzustand F₃ aufgrund der niedrigen Detektionsspannung bzw. Nullspannung zuordnen.

Grundsätzlich lassen sich über die Sicherheitselektronik 7, gegebenenfalls durch zusätzliche elektronische Komponenten, auch weitere Fehlerzustände detektieren, wobei als Beispiel für einen weiteren Fehlerzustand F_{W} etwa ein serieller Lichtbogen im Innenleiter 1 genannt werden kann.

### BEZUGSZEICHENLISTE

- 1: Innenleiter
- 2: innere Isolationsschicht
- 3: Abschirmung

- 3a: Folienschirm
- 3b: Detektionsleiter

- 4: Kabelmantel
- 5: Versorgungsleitung
- 6: Lastwiderstand
- 7: Sicherheitselektronik
- 8: Trennelement
- 9: Auswerteschaltung
- 10: Steckverbindung
- 11: Stromquelle

- M: Grundpotential (Masse)
- L: Verbraucher
- R_{A}: Abschlusswiderstand
- R_{S}: Sensorwiderstand
- F₁: erster Fehlerzustand
- F₂: zweiter Fehlerzustand
- F₃: dritter Fehlerzustand
- F_{W}: weiterer Fehlerzustand
- U_{S}: Detektionsspannung
- U₁: erste obere Spannungsschwelle
- U₂: zweite obere Spannungsschwelle
- U₃: dritte untere Spannungsschwelle

## Patentansprüche

1. Leitungsanordnung für ein Gleichspannungs-Bordnetz eines Kraftfahrzeuges umfassend
- eine Stromquelle (11),
- zumindest einen an einem Grundpotential (M) angeschlossenen Verbraucher (L),
- eine eine Abschirmung (3) und einen Innenleiter (1) aufweisende Versorgungsleitung (5), welche Versorgungsleitung (5) quellenseitig an die Stromquelle und lastseitig an den zumindest einen Verbraucher (L) angeschlossen ist;
- eine zwischen Stromquelle (11) und Versorgungsleitung geschaltete Sicherheitselektronik (7) mit einem ansteuerbaren Trennelement (8),
**dadurch gekennzeichnet, dass**
die Abschirmung (3) als Sensorleiter ausgebildet ist, indem die Abschirmung (3) lastseitig über einen, im Verhältnis zu einem Lastwiderstand (6) hochohmigen, Abschlusswiderstand (R_{A}) an den Innenleiter (1) angeschlossen ist und quellenseitig über einen, im Verhältnis zum Abschlusswiderstand (R_{A}) niederohmigen, Detektionswiderstand (R_{S}) am Grundpotential (M) angeschlossen ist,
wobei die Sicherheitselektronik (7) eine Auswerteschaltung (9) umfasst und die Auswerteschaltung (9) am Detektionswiderstand (R_{S}) eine Detektionsspannung (U_{S}) abgreift, um basierend auf der gemessenen Detektionsspannung (U_{S}) zumindest einen ersten Fehlerzustand (F₁), insbesondere einen parallelen Lichtbogen, zu erkennen und das Trennelement (8) zu betätigen, wenn die Detektionsspannung (U_{S}) oberhalb einer ersten, einen Regelbetriebs-Spannungsbereich nach oben begrenzenden, oberen Spannungsschwelle (U₁) liegt.

2. Leitungsanordnung nach Anspruch 1, **dadurch gekennzeichnet, dass** die Abschirmung (3) als Schirmgeflecht ausgebildet ist.

3. Leitungsanordnung nach Anspruch 1, **dadurch gekennzeichnet, dass** die Abschirmung (3) einen metallischen Folienschirm (3a) und zumindest einen den Folienschirm (3a) kontaktierenden Detektionsleiter (3b) umfasst, wobei der Detektionsleiter (3b) zwischen Abschlusswiderstand (R_{A}) und Detektionswiderstand (R_{S}) verläuft.

4. Leitungsanordnung nach einem der Ansprüche 1 bis 3, **dadurch gekennzeichnet, dass** die Auswerteschaltung (9) weiters ausgebildet ist, um
- einen zweiten Fehlerzustand (F₂) zu erkennen, wenn die Detektionsspannung (U_{S}) zwischen einer zweiten oberen Spannungsschwelle (U₂) und einer Betriebsspannung liegt und/oder
- einen dritten Fehlerzustand (F₃) zu erkennen, wenn die Detektionsspannung (U_{S}) unterhalb einer dritten, den Regelbetriebs-Spannungsbereich nach unten begrenzenden, unteren Spannungsschwelle (U_{S}) liegt.

5. Leitungsanordnung nach einem der Ansprüche 1 bis 4, **dadurch gekennzeichnet, dass** mehrere Verbraucher (L_{1···n}) an der Versorgungsleitung (5) angeschlossen sind, wobei jeder Verbraucher (L_{1···n}) über einen separaten Abschlusswiderstand (R_{A}) parallel an der als Sensorleiter ausgebildeten Abschirmung (3) angeschlossen ist.

6. Leitungsanordnung nach Anspruch 5, **dadurch gekennzeichnet, dass** die Auswerteschaltung (9) weiters ausgebildet ist, um die Anzahl der an die Versorgungsleitung (5) angeschlossenen Verbraucher (L_{1···n}) zu bestimmen, wenn die Detektionsspannung (U_{S}) innerhalb des Regelbetriebs-Spannungsbereichs liegt.

7. Leitungsanordnung nach einem der Ansprüche 5 bis 6, **dadurch gekennzeichnet, dass** der elektrische Widerstand der separaten Abschlusswiderstände (R_{A}) der einzelnen Verbraucher (L_{1···n}) unterschiedlich groß ist.

8. Leitungsanordnung nach einem der Ansprüche 1 bis 7, **dadurch gekennzeichnet, dass** die Auswerteschaltung (9) zumindest einen analogen Operationsverstärker umfasst.

9. Leitungsanordnung nach einem der Ansprüche 1 bis 8, **dadurch gekennzeichnet, dass** die Auswerteschaltung (9) eine mit einer Fahrzeugelektronik verbindbare digitale Auswerteeinheit umfasst und die Detektionsspannung (U_{S}) das Eingangssignal der Auswerteeinheit bildet.

10. Leitungsanordnung nach einem der Ansprüche 1 bis 9, **dadurch gekennzeichnet, dass** der zumindest eine Verbraucher (L) mittels einer Steckverbindung (10) mit der Versorgungsleitung (5) verbunden ist, wobei der Abschlusswiderstand (R_{A}) in die Steckverbindung (10) integriert ist.

11. Leitungsanordnung nach einem der Ansprüche 1 bis 10, **dadurch gekennzeichnet, dass** der Detektionswiderstand (R_{S}) in die Sicherheitselektronik (7) integriert ist.

12. Leitungsanordnung nach einem der Ansprüche 1 bis 11, **dadurch gekennzeichnet, dass** der elektrische Widerstand des Detektionswiderstands (R_{S}) zumindest eine Größenordnung größer als der Lastwiderstand (6) des zumindest einen Verbrauchers (L) ist und/oder der Abschlusswiderstand (R_{A}) zumindest zwei Größenordnungen größer als der Lastwiderstand (6) des zumindest einen Verbrauchers (L) ist.

13. Leitungsanordnung nach einem der Ansprüche 1 bis 12, **dadurch gekennzeichnet, dass** die Sicherheitselektronik (7) quellenseitig ein stromstärkenabhängig selbstauslösendes Sicherungselement, vorzugsweise eine Schmelzsicherung, aufweist.

14. Leitungsanordnung nach einem der Ansprüche 1 bis 13, **dadurch gekennzeichnet, dass** die Versorgungsleitung (5) zumindest zwei Zweige umfasst,
wobei an jedem Zweig zumindest ein Verbraucher (L) angeschlossen ist,
und wobei das ansteuerbare Trennelement (8) ausgebildet ist, um jeden Zweig separat von der Stromquelle (11) zu trennen.

15. Verwendung einer Leitungsanordnung nach einem der Ansprüche 1 bis 14, in einem Gleichspannungs-Bordnetz eines Kraftfahrzeugs mit einer Betriebsspannung größer 20V, insbesondere mit einer Betriebsspannung von 48V.

## Claims

1. A line arrangement for a DC voltage onboard electrical system of a motor vehicle, comprising
- a power source (11),
- at least one load (L) connected to a ground potential (M),
- a supply line (5) which has a shielding (3) and an inner conductor (1), which supply line (5) is connected to the power source on the source side and to the at least one load (L) on the load side; and
- a safety electronics system (7) which is connected between the power source (11) and the supply line and which comprises an actuatable disconnection element (8),
**characterised in that**
the shielding (3) is configured in the form of a sensor conductor **in that** the shielding (3) is connected to the inner conductor (1) on the load side via a terminating resistor (R_{A}) which is high-ohmic in comparison to a load resistor (6) and is connected to the ground potential (M) on the source side via a detection resistor (R_{S}) which is low-ohmic in comparison to the terminating resistor (R_{A}),
wherein the safety electronics system (7) comprises an analysis circuit (9), and the analysis circuit (9) taps a detection voltage (Us) on the detection resistor (R_{S}) in order, on the basis of the measured detection voltage (Us), to identify at least a first fault state (F₁), in particular parallel arcing, and to actuate the disconnection element (8) when the detection voltage (Us) lies above a first, upper voltage threshold (U₁), which constitutes an upper limit of a normal operation voltage range.

2. The line arrangement according to claim 1, **characterised in that** the shielding (3) is configured as a braided shield.

3. The line arrangement according to claim 1, **characterised in that** the shielding (3) comprises a metal foil shield (3a) and at least one detection conductor (3b) contacting the foil shield (3a), wherein the detection conductor (3b) runs between the terminating resistor (R_{A}) and detection resistor (R_{S}).

4. The line arrangement according to any one of claims 1 to 3, **characterised in that** the analysis circuit (9) is further configured to
- identify a second fault state (F₂) when the detection voltage (Us) lies between a second upper voltage threshold (U₂) and an operating voltage, and/or
- to identify a third fault state (F₃) when the detection voltage (Us) lies below a third, lower voltage threshold (U₃), which constitutes a lower limit of the normal operation voltage range.

5. The line arrangement according to any one of claims 1 to 4, **characterised in that** a plurality of loads (L_{1···n}) are connected to the supply line (5), wherein each load (L_{1···n}) is connected in parallel via a separate terminating resistor (R_{A}) to the shielding (3) configured as a sensor conductor.

6. The line arrangement according to claim 5, **characterised in that** the analysis circuit (9) is further configured to determine the number of loads (L_{1···n}) connected to the supply line (5) when the detection voltage (Us) lies within the normal operation voltage range.

7. The line arrangement according to any one of claims 5 to 6, **characterised in that** the electrical resistance of the separate terminating resistors (R_{A}) of the individual loads (L_{1···n}) is different.

8. The line arrangement according to any one of claims 1 to 7, **characterised in that** the analysis circuit (9) comprises at least one analogue operation amplifier.

9. The line arrangement according to any one of claims 1 to 8, **characterised in that** the analysis circuit (9) comprises a digital analysis unit connectable to a vehicle electronics system and the detection voltage (Us) forms the input signal of the analysis unit.

10. The line arrangement according to any one of claims 1 to 9, **characterised in that** the at least one load (L) is connected to the supply line (5) by means of a plug connection (10), wherein the terminating resistor (R_{A}) is integrated in the plug connection (10).

11. The line arrangement according to any one of claims 1 to 10, **characterised in that** the detection resistor (R_{S}) is integrated into the safety electronics system (7).

12. The line arrangement according to any one of claims 1 to 11, **characterised in that** the electrical resistance of the detection resistor (R_{S}) is at least one order of magnitude greater than the load resistor (6) of the at least one load (L) and/or the terminating resistor (R_{A}) is at least two orders of magnitude greater than the load resistor (6) of the at least one load (L).

13. The line arrangement according to any one of claims 1 to 12, **characterised in that** the safety electronics system (7) has, on the source side, a safety element, preferably a safety fuse, which self-triggers depending on the amperage.

14. The line arrangement according to any one of claims 1 to 13, **characterised in that** the supply line (5) comprises at least two branches,
wherein at least one load (L) is connected to each branch, and wherein the actuatable disconnection element (8) is configured to disconnect each branch separately from the power source (11).

15. Use of a line arrangement according to any one of claims 1 to 14 in a DC voltage onboard electrical system of a motor vehicle with an operating voltage greater than 20V, in particular with an operating voltage of 48V.

## Revendications

1. Ensemble circuit pour un système électrique intégré à tension CC d'un véhicule à moteur, comprenant
- une source d'alimentation (11),
- au moins une charge (L) connectée à un potentiel de terre (M),
- un circuit d'alimentation (5) qui a une protection (3) et un conducteur interne (1), lequel circuit d'alimentation (5) est connecté à la source d'alimentation du côté source et à l'au moins une charge (L) sur le côté charge ; et
- un système électronique de sécurité (7) qui est connecté entre la source d'alimentation (11) et l'ensemble circuit et qui comprend un élément de déconnexion actionnable (8),
**caractérisé en ce que**
la protection (3) est conçue sous la forme d'un conducteur de capteur **en ce que** la protection (3) est connectée au conducteur interne (1) sur le côté charge par l'intermédiaire d'une résistance de terminaison (R_{A}) qui a une valeur ohmique élevée par rapport à une résistance de charge (6) et est connectée au potentiel de terre (M) sur le côté source par l'intermédiaire d'une résistance de détection (R_{S}) qui a une valeur ohmique faible par rapport à la résistance de terminaison (R_{A}),
dans lequel le système électronique de sécurité (7) comprend un circuit d'analyse (9), et le circuit d'analyse (9) recueille une tension de détection (Us) sur la résistance de détection (R_{S}) afin, sur la base de la tension de détection mesurée (Us), d'identifier au moins un premier état de défaut (F₁), en particulier la formation d'arcs parallèles, et pour actionner l'élément de déconnexion (8) lorsque la tension de détection (Us) se situe au-dessus d'un premier seuil de tension maximal (U₁) délimitant le haut d'une plage de tension de fonctionnement normal.

2. Ensemble circuit selon la revendication 1, **caractérisé en ce que** la protection (3) est conçue sous forme d'un tressage.

3. Ensemble circuit selon la revendication 1, **caractérisé en ce que** la protection (3) comprend un écran en feuille métallique (3a) et au moins un conducteur de détection (3b) en contact avec l'écran en feuille (3a), dans lequel le conducteur de détection (3b) s'étend entre la résistance de terminaison (R_{A}) et la résistance de détection (R_{S}).

4. Ensemble circuit selon l'une quelconque des revendications 1 à 3, **caractérisé en ce que** le circuit d'analyse (9) est en outre configuré pour
- identifier un deuxième état de défaut (F₂) lorsque la tension de détection (Us) est comprise entre un deuxième seuil de tension maximal (U₂) et une tension de fonctionnement, et/ou
- identifier un troisième état de défaut (F₃) lorsque la tension de détection (Us) est inférieure à un troisième seuil de tension minimal (U₃) délimitant le bas de la plage de tension de fonctionnement normal.

5. Ensemble circuit selon l'une quelconque des revendications 1 à 4, **caractérisé en ce que** une pluralité de charges (L_{1···n}) sont connectées au circuit d'alimentation (5), dans lequel chaque charge (L_{1···n}) est connectée en parallèle au moyen d'une résistance de terminaison séparée (R_{A}) à la protection (3) configurée comme conducteur de capteur.

6. Ensemble circuit selon la revendication 5, **caractérisé en ce que** le circuit d'analyse (9) est en outre configuré pour déterminer le nombre de charges (L_{1···n}) connectées au circuit d'alimentation (5) lorsque la tension de détection (Us) se situe dans la plage de tension de fonctionnement normal.

7. Ensemble circuit selon l'une quelconque des revendications 5 à 6, **caractérisé en ce que** la résistance électrique des résistances de terminaison (R_{A}) séparées des charges individuelles (L_{1···n}) est différente.

8. Ensemble circuit selon l'une quelconque des revendications 1 à 7, **caractérisé en ce que** le circuit d'analyse (9) comprend au moins un amplificateur de fonctionnement analogique.

9. Ensemble circuit selon l'une quelconque des revendications 1 à 8, **caractérisé en ce que** le circuit d'analyse (9) comprend une unité d'analyse numérique pouvant être connectée à un système électronique de véhicule et la tension de détection (Us) forme le signal d'entrée de l'unité d'analyse.

10. Ensemble circuit selon l'une quelconque des revendications 1 à 9, **caractérisé en ce que** l'au moins une charge (L) est connectée au circuit d'alimentation (5) au moyen d'une connexion enfichable (10), dans lequel la résistance de terminaison (R_{A}) est intégrée à la connexion enfichable (10).

11. Ensemble circuit selon l'une quelconque des revendications 1 à 10, **caractérisé en ce que** la résistance de détection (R_{S}) est intégrée au système électronique de sécurité (7).

12. Ensemble circuit selon l'une quelconque des revendications 1 à 11, **caractérisé en ce que** la valeur de résistance électrique de la résistance de détection (R_{S}) est supérieure d'au moins un ordre de grandeur à celle de la résistance de charge (6) de l'au moins une charge (L) et/ou la résistance de terminaison (R_{A}) est supérieure d'au moins deux ordres de grandeur à la résistance de charge (6) de l'au moins une charge (L).

13. Ensemble circuit selon l'une quelconque des revendications 1 à 12, **caractérisé en ce que** le système électronique de sécurité (7) a, du côté source, un élément de sécurité, préférentiellement un fusible de sécurité, qui se déclenche automatiquement en fonction de l'intensité du courant.

14. Ensemble circuit selon l'une quelconque des revendications 1 à 13, **caractérisé en ce que** le circuit d'alimentation (5) comprend au moins deux branches,
dans lequel au moins une charge (L) est connectée à chaque branche,
et dans lequel l'élément de déconnexion actionnable (8) est configuré pour déconnecter chaque branche séparément de la source d'alimentation (11).

15. Utilisation d'un ensemble circuit selon l'une quelconque des revendications 1 à 14 dans un système électrique intégré à tension CC d'un véhicule à moteur avec une tension de fonctionnement supérieure à 20 V, en particulier avec une tension de fonctionnement de 48 V.
